(19) Europäisches Patentamt

European Patent Office

Office européen des brevets

(11) EP 4 752 790 A1

(12) **EUROPEAN PATENT APPLICATION**

(43) Date of publication:
03.06.2026 Bulletin 2026/23

(21) Application number: 25202074.8

(22) Date of filing: 15.09.2025

(51) International Patent Classification (IPC):
G06N 3/084 $^{(2023.01)}$    G06N 3/098 $^{(2023.01)}$

(52) Cooperative Patent Classification (CPC):
G06N 3/084; G06N 3/098

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.11.2024 IN 202421092860

(71) Applicant: Tata Consultancy Services Limited
Maharashtra (IN)

(72) Inventors:
• SIVAKUMAR, Narendran
SW1X 7HS Guildford, Surrey (IN)
• RAMASAMY VENKADA, Subramanian
560066 Bangalore, Karnataka (IN)
• VISWANATHAN, Sankaranarayanan
600113 Chennai, Tamil Nadu (IN)
• KANNAN, Radhika
600113 Chennai, Tamil Nadu (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR ARTIFICIAL INTELLIGENCE (AI) AGENT TRAINING**

(57) AI systems, while have excelled in environments defined by clear rules and singular tasks, have been found to be struggling to handle Knowledge works which encompass tasks requiring judgment, interpretation, and creative problem-solving. Method and system disclosed herein provide an Artificial Intelligence (AI) agent training approach. In this approach, the system 100 achieves collaboration between different AI agents that are part of a network, for handling each task. During the training, randomly initialized weights associated with a plurality of edges are used, based on an action that is dynamically decided, based on one or more activation levels of one or more of the plurality of AI agents identified as active based on the decided action.

initializing, via one or more hardware processors, a network comprising a plurality of nodes and a plurality of edges, wherein the plurality of nodes are associated with a plurality of Artificial Intelligence (AI) agents, and the plurality of edges are associated with a plurality of randomly initialized weights — 202

generating, by processing one or more input signals obtained for one or more AI agents from among the plurality of AI agents, associated one or more outputs, by the one or more AI agents, via the one or more hardware processors — 204

deciding an action from among a plurality of actions based on the one or more outputs, via the one or more hardware processors, wherein the plurality of actions comprise: i) a decision on whether to activate one or more additional AI agents based on a related threshold, ii) compute and execute one or more tasks, and iii) decision on what information to transmit as task output to one or more connected AI agents — 206

training the network to generate a trained network, via the one or more hardware processors, by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:
$$\Delta w_{ij} = \alpha \cdot (a_i \cdot a_j),$$
where $a_i$ and $a_j$ are activation levels of agents $i$ and $j$, $\alpha$ is a learning rate updating weights based on the computed weight adjustment value as:
$w_{ij} \leftarrow w_{ij} \cdot (1-\lambda) + \Delta w_{ij}$, where $\lambda$ is a predefined decay factor — 208

200

FIG. 2

EP 4 752 790 A1

## Description

CROSS-REFERENCE TO RELATED APPLICATIONS AND PRIORITY

The present application claims priority from Indian application no. 202421092860, filed on November 27, 2024.

TECHNICAL FIELD

The disclosure herein generally relates to artificial intelligence (AI), and, more particularly, to a method and system for artificial intelligence (AI) agent training.

BACKGROUND

Traditionally, AI systems have excelled in environments defined by clear rules and singular tasks. However, the landscape of global industries, ranging from finance and healthcare to education and creative sectors, demand a more nuanced and flexible approach. Knowledge work, which encompasses tasks requiring judgment, interpretation, and creative problem-solving, presents unique challenges that standard AI models have struggled to address effectively. Existing systems often lack the capability for real-time, dynamic collaboration among multiple AI agents. While some AI systems can utilize tools, they generally do not have the ability to select and switch between them based on the specific demands of the task at hand. Many AI systems are not designed for scalability and struggle with adapting in real-time to new data or situations.

SUMMARY

Embodiments of the present disclosure present technological improvements as solutions to one or more of the above-mentioned technical problems recognized by the inventors in conventional systems. For example, in one embodiment, a processor implemented method is provided. The method includes: initializing, via one or more hardware processors, a network comprising a plurality of nodes and a plurality of edges, wherein the plurality of nodes are associated with a plurality of Artificial Intelligence (AI) agents, and the plurality of edges are associated with a plurality of randomly initialized weights; generating, by processing one or more input signals obtained for one or more AI agents from among the plurality of AI agents, associated one or more outputs, by the one or more AI agents, via the one or more hardware processors; deciding an action from among a plurality of actions based on the one or more outputs, via the one or more hardware processors, wherein the plurality of actions comprise: i) a decision on whether to activate one or more additional AI agents based on a related threshold, ii) compute and execute one or more tasks, and iii) decision on what information to transmit as task output to one or more connected AI agents; and training the network to generate a trained network, via the one or more hardware processors, by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

where ai and aj are activation levels of agents i and j, $\alpha$ is a learning rate updating weights based on the computed weight adjustment value as: wij $\leftarrow$ wij $\cdot (1-\lambda) + \Delta$wij, where $\lambda$ is a predefined decay factor.

Further, in the method, for one or more recommendations generated by the trained network, a feedback is obtained from an environment where the plurality of AI agents are deployed, and wherein the feedback is used to update a plurality of parameters of the network and reconfigure the plurality of edges in the network.

Further, in the method, after each of the one or more tasks, a refractory period is simulated for respective one or more AI agents to prevent immediate reactivation of the respective one or more AI agents.

Further, in the method, sensitivity of one or more of the AI agents is varied to dynamically match at least one of an activity period or an inactivity period of the one or more AI agents.

Further, in the method, a firing pattern replication technique is used to determine, based on simulated neural action potentials, when each of the plurality of AI agents processes and sends information.

In another embodiment, a system is provided. The system includes one or more hardware processors, a communication interface, and a memory storing a plurality of instructions. The plurality of instructions when executed, cause the one or more hardware processors to: initialize a network comprising a plurality of nodes and a plurality of edges, wherein the plurality of nodes are associated with a plurality of Artificial Intelligence (AI) agents, and the plurality of edges are associated with a plurality of randomly initialized weights; generate, by processing one or more input signals obtained for one or more AI agents from among the plurality of AI agents, associated one or more outputs by the one or more AI agents; decide an action from among a plurality of actions based on the one or more outputs, wherein the plurality of actions comprise: i) a decision on whether to activate one or more additional AI agents based on a related threshold, ii) compute and execute one or more tasks, and iii) decision on what information to transmit as task output to one or more connected AI agents; and train the network to generate a trained network by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

where ai and aj are activation levels of agents i and j, $\alpha$ is a learning rate updating weights based on the computed weight adjustment value as: $w_{ij} \leftarrow w_{ij} \cdot (1-\lambda) + \Delta w_{ij}$, where $\lambda$ is a predefined decay factor.

Further, in the system, for one or more recommendations generated by the trained network, a feedback is obtained by the one or more hardware processors, from an environment where the plurality of AI agents are deployed, and wherein the feedback is used to update a plurality of parameters of the network and reconfigure the plurality of edges in the network.

Further, in the system, the one or more hardware processors are configured to simulate a refractory period after each of the one or more tasks, for respective one or more AI agents to prevent immediate reactivation of the respective one or more AI agents.

Further, in the system, the one or more hardware processors are configured to vary sensitivity of one or more of the AI agents to dynamically match at least one of an activity period or an inactivity period of the one or more AI agents.

Further, in the system, the one or more hardware processors are configured to use a firing pattern replication technique to determine, based on simulated neural action potentials, when each of the plurality of AI agents processes and sends information.

In yet another aspect, there are provided one or more non-transitory machine-readable information storage mediums comprising one or more instructions which when executed by one or more hardware processors cause: initializing a network comprising a plurality of nodes and a plurality of edges, wherein the plurality of nodes are associated with a plurality of Artificial Intelligence (AI) agents, and the plurality of edges are associated with a plurality of randomly initialized weights; generating, by processing one or more input signals obtained for one or more AI agents from among the plurality of AI agents, associated one or more outputs, by the one or more AI agents; deciding an action from among a plurality of actions based on the one or more outputs, wherein the plurality of actions comprise: i) a decision on whether to activate one or more additional AI agents based on a related threshold, ii) compute and execute one or more tasks, and iii) decision on what information to transmit as task output to one or more connected AI agents; and training the network to generate a trained network by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

where ai and aj are activation levels of agents i and j, $\alpha$ is a learning rate updating weights based on the computed weight adjustment value as: $w_{ij} \leftarrow w_{ij} \cdot (1-\lambda) + \Delta w_{ij}$, where $\lambda$ is a predefined decay factor.

Further, the non-transitory computer readable medium causes the one or more hardware processors to obtain, for one or more recommendations generated by the trained network, a feedback from an environment where the plurality of AI agents are deployed, and wherein the feedback is used to update a plurality of parameters of the network and reconfigure the plurality of edges in the network.

Further, the non-transitory computer readable medium causes the one or more hardware processors to simulate a refractory period after each of the one or more tasks, for respective one or more AI agents to prevent immediate reactivation of the respective one or more AI agents.

Further, the non-transitory computer readable medium causes the one or more hardware processors to vary sensitivity of one or more of the AI agents to dynamically match at least one of an activity period or an inactivity period of the one or more AI agents.

Further, the non-transitory computer readable medium causes the one or more hardware processors to use a firing pattern replication technique to determine, based on simulated neural action potentials, when each of the plurality of AI agents processes and sends information.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for Artificial Intelligence (AI) agent training, according to some embodiments of the present disclosure.
FIG. 2 is a flow diagram depicting steps involved in the process of AI agent training, by the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Traditionally, AI systems have excelled in environments defined by clear rules and singular tasks. However, the landscape of global industries-ranging from finance and healthcare to education and creative sectors-demands a more nuanced and flexible approach. Knowledge work, which encompasses tasks requiring judgment, interpretation, and creative problem-solving, presents unique challenges that standard AI models have struggled to address effectively. Existing systems often lack the capability for real-time, dynamic collaboration among multiple AI agents. While some AI systems can utilize tools, they generally do not have the ability to select and switch between them based on the specific demands of the task at hand. Many AI systems are not designed for scalability and struggle with adapting in real-time to new data or situations.

System and method of the present disclosure addresses these challenges by providing an AI agent training mechanism. In this method, initially, a network comprising a plurality of nodes and a plurality of edges is initialized, wherein the plurality of nodes are associated with a plurality of Artificial Intelligence (AI) agents, and the plurality of edges are associated with a plurality of randomly initialized weights. Further, by processing one or more input signals obtained for one or more AI agents from among the plurality of AI agents, associated one or more outputs are generated. Further, an action is decided from among a plurality of actions, based on the one or more outputs. The plurality of actions comprise: i) a decision on whether to activate one or more additional AI agents based on a related threshold, ii) compute and execute one or more tasks, and iii) decision on what information to transmit as task output to one or more connected AI agents. Further, the network is trained to generate a trained network, by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

where $a_i$ and $a_j$ are activation levels of agents $i$ and $j$, $\alpha$ is a learning rate updating weights based on the computed weight adjustment value as: $w_{ij} \leftarrow w_{ij} \cdot (1-\lambda) + \Delta w_{ij}$, where $\lambda$ is a predefined decay factor.

The trained network may be then used for generating recommendations for one or more tasks being handled. The proposed approach addresses the challenges of existing AI systems by enabling real-time collaboration among multiple AI agents, thereby enhancing adaptability and flexibility. The system 100 described herein overcomes these limitations by initializing a network of AI agents capable of not only learning from experience (through the adjustment of synaptic weights) but also dynamically selecting and activating agents based on task-specific demands. This ensures scalability and real-time adaptability, allowing the network comprising the AI agents to process new information and reconfigure its structure in response to changing environments. By simulating a biological neural network with interconnected AI agents, the system 100 is able to make more nuanced decisions and recommendations across a wide variety of tasks that require interpretation, judgment, and problem-solving. The system 100 thus introduces a more flexible model for handling complex workflows by continuously refining the network's parameters based on feedback from the environment, which leads to better performance and more accurate task outcomes.

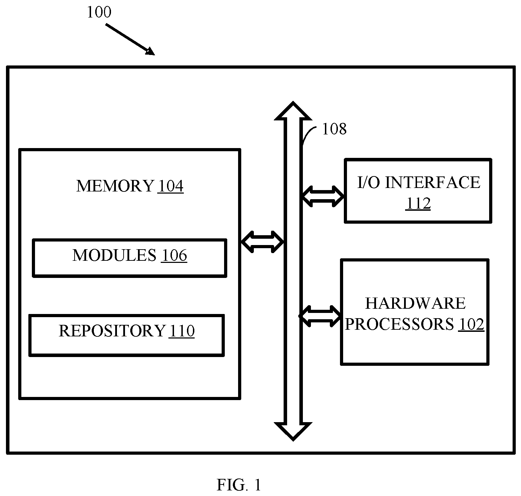

Referring now to the drawings, and more particularly to FIG. 1 through FIG. 2, where similar reference characters denote corresponding features consistently throughout the figures, there are shown preferred embodiments and these embodiments are described in the context of the following exemplary system and/or method.

FIG. 1 illustrates an exemplary system for AI agent training, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of training of the AI agents, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various submodules (not shown). The plurality of modules 106 may include computer-readable instructions that supplement applications or functions performed by the system 100 for the training of the AI agents.

The data repository (or repository) 110 may include a plurality of abstracted piece of code for refinement and data that is processed, received, or generated as a result of the execution of the plurality of modules in the module(s) 106.

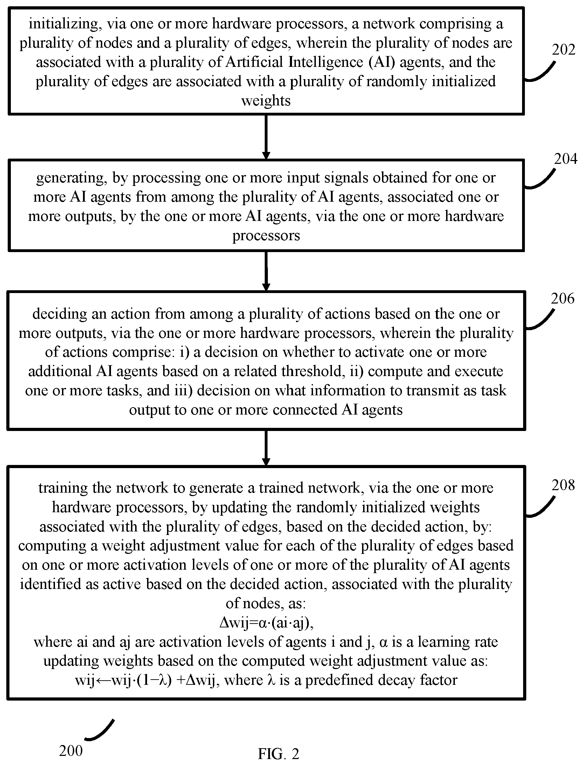

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagram in FIG. 2.

FIG. 2 is a flow diagram depicting steps involved in the process of AI agent training, by the system of FIG. 1, according to some embodiments of the present disclosure.

At step 202 of method 200 in FIG. 2, the system 100 initializes, via the one or more hardware processors 102, a network comprising a plurality of nodes and a plurality of edges. The plurality of nodes are associated with a plurality of Artificial Intelligence (AI) agents, and the plurality of edges are associated with a plurality of randomly initialized weights.

Each of the AI agents, as a neural node, is designed to function as a standalone processor of information, analogous to how neurons process signals in human brain. These nodes are interconnected through a network that allows for the transmission of data, mirroring synaptic connections between actual neurons. This architecture supports various neural network topologies, such as feedforward networks for straightforward task execution and recurrent networks for tasks requiring memory and feedback processing.

Connections between the nodes (agents) are dynamic in nature, which is achieved by simulating plasticity of biological synapses. The system 100 uses a Synaptic Simulation Algorithm that adjusts the weight of connections based on the efficacy of transmission and relevance of the information exchanged. Such adjustments are akin to the strengthening or weakening of synapses. The Synaptic Simulation Algorithm is given below:

1. Initialization
1.1 Initialize Network Structure

- For each node in the network:

  ◦ Assign a unique identifier.
  ◦ Initialize processing capabilities based on designated cognitive function (e.g., pattern recognition, logical reasoning).
  ◦ Set initial synaptic weights randomly or based on prior knowledge.

1.2 Set Parameters

- Define learning rate ($\alpha$).
- Set decay factor ($\lambda$) for synaptic adjustments.
- Establish thresholds for activation and decision-making processes.

2. Processing and Decision Making
2.1 Input Signal Reception

• Each agent receives input signals from its environment or other agents.

2.2 Data Processing

• Apply the processing function specific to the agent's role:

    ○ Calculate outputs using activation functions (e.g., sigmoid, ReLU).

2.3 Decision Making

• Based on processed data, each agent decides:

    ○ Whether to activate further based on its threshold.
    ○ Compute and execute Tasks
    ○ What information to transmit Task output to connected agents.

3. Synaptic Weight Adjustment (Learning)
3.1 Calculate Adjustments

• For each connection between agents, i and j:

    ○ Compute the adjustment $\Delta w_{ij}$ based on the correlation of activity:

$$\Delta w_{ij} = \alpha \cdot (a_i \cdot a_j)$$

    where ai and aj are activation levels of agents i and j.

3.2 Apply Decay to Synaptic Weights

• Adjust weights to account for natural decay and relevance:

$$w_{ij} \leftarrow w_{ij} \cdot (1 - \lambda) + \Delta w_{ij}$$

3.3 Normalize Weights (Optional)

• Normalize the weights to prevent excessive growth:

$$w_{ij} \leftarrow w_{ij} / \max(\sum_k w_{ik}, 1)$$

4. Feedback Integration and Adaptation
4.1 Collect Feedback

• Gather performance feedback from the environment or higher system layers.

4.2 Adjust Parameters

• Modify learning rate ($\alpha$) or other parameters based on feedback to optimize future responses.
• The algorithm adjusts the weights (strength) of the synaptic connections between different agents based on their performance outcomes. If two agents frequently interact and produce successful outcomes, the synaptic weight between them is increased, enhancing their connectivity.

    ○ Negative Feedback: Conversely, if interactions lead to poor outcomes, the synaptic connections are weakened to discourage those pathways

4.3 Dynamic Reconfiguration

• Re-evaluate and possibly reconfigure the connections between agents based on ongoing performance and feedback:

    ○ Strengthen or weaken connections based on feedback and outcomes.
    ○ Reallocate tasks among agents based on efficiency and demand

Further, at step 204 of the method 200, the system 100 generates associated one or more outputs by processing one or more input signals obtained for one or more AI agents from among the plurality of AI agents, by the one or more AI agents, via the one or more hardware processors 102. Each AI agent is equipped with a computational model that defines a specific threshold for activation. This threshold is dynamically adjustable and is influenced by the agent's previous activations and the current network state, mirroring the threshold variability of biological neurons. The AI agent activation is triggered when a weighted sum of incoming signals (inputs from other agents or environmental data) exceeds this threshold, prompting one or more of the agents to process the information and prepare it for output. Upon reaching or surpassing the activation threshold, the AI agent processes the input data using a designated cognitive function and then transmits the output to other agents. This output mimics the action potential in biological neurons, which triggers neurotransmitter release at synapses. In an embodiment, post-activation, each AI agent undergoes a refractory period where the associated activation threshold is temporarily raised, reducing its susceptibility to immediate re-activation. This feature prevents overstimulation of the AI agents and ensures that signal transmission across the network does not lead to chaotic oscillations or feedback loops.

Further, at step 206 of the method 200, the system 100 decides an action from among a plurality of actions based on the one or more outputs, via the one or more hardware processors 102. The plurality of actions include: i) a decision on whether to activate one or more additional AI agents based on a related threshold, ii) compute and execute one or more tasks, and iii) decision on what information to transmit as task output to one or more connected AI agents.

The system 100 decides one of the actions from among the plurality of actions, based on the activation levels of each of the AI agents and an associated network topology. Below, it is explained how each of these actions is decided by the system 100.

    i. Activation of Additional Agents: If the system 100 determines that a particular task requires more resources or specialized processing, it may activate additional AI agents. This decision is based on the complexity of the task and whether the activation threshold of one or more other agents has been reached. For example, if the system 100 is handling a task involving pattern recognition, it may activate agents that specialize in different types of pattern analysis.

    ii. Task Execution: Once an AI agent or a set of AI agents is activated, the system 100 computes the task. Each AI agent applies a specific cognitive function, such as logical reasoning, pattern recognition, or decision-making, to the data being processed.

    iii. Transmission of Information: After completing an assigned part of the task, the AI agent decides what information should be transmitted to other connected AI agents. This decision depends on relevance and importance of the processed data to the next stage of the task. The AI agents prioritize sending task-critical information based on the overall network requirements and task complexity.

The decision-making process is influenced by the learned synaptic weights that connect the AI agents. These synaptic weights reflect strength of the relationships between the AI agents, and are continuously updated based on feedback, ensuring that the most effective agents are activated for specific tasks.

Further, at step 208 of the method 200, the system 100 performs training of the network to generate a trained network, via the one or more hardware processors 102, by updating the randomly initialized weights associated with the plurality of edges, based on the decided action. by: computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

where ai and aj are activation levels of agents i and j, $\alpha$ is a learning rate updating weights based on the computed weight adjustment value as: $w_{ij} \leftarrow w_{ij} \cdot (1-\lambda) + \Delta w_{ij}$, where $\lambda$ is a predefined decay factor.

The trained network is then used for generating one or more recommendations with respect to one or more tasks. Examples of such tasks are given below:

a. Customer Support Automation:

Multiple AI agents are activated to handle different aspects of customer queries. For instance, one AI agent might specialize in language processing, understanding the customer's request, while another AI agent retrieves relevant information that may have been requested by the customer or maybe required for providing requested service to the customer. Based on the processed data, a recommendation is made to either provide a direct solution or escalate the issue to human support.

b. Financial Risk Analysis:

The AI agents are activated to analyze market data, identify patterns, and compute potential risks. One AI agent processes historical data, while another forecasts future trends. If required, additional AI agents are activated to compute risk scores for different financial instruments. The network is continuously updated as new data arrives, allowing the system 100 to adapt its recommendations.

In an embodiment, for one or more recommendations generated by the trained network, a feedback is obtained from an environment where the plurality of AI agents are deployed. The feedback is used to update a plurality of parameters of the network and reconfigure the plurality of edges in the network, to further improve the recommendations. In an embodiment, sensitivity of one or more of the AI agents is varied to dynamically match at least one of an activity period or an inactivity period of the one or more AI agents. Like the refractory period, once an AI agent completes a task, its sensitivity or activation threshold is increased temporarily, preventing it from being reactivated immediately. This ensures that the system 100 does not overburden individual AI agents and promotes a balanced distribution of tasks across the network.

The recommendations generated by the network of AI agents maybe used for various tasks. Some examples of the tasks are given below.

Healthcare Diagnostics:

In the traditional approaches, the AI models for diagnostics rely on predefined rules and datasets, limiting their ability to adapt in real-time to new symptoms or patient data. In the method 200, the AI agents collaborate dynamically. One AI agent processes radiology images, another cross-references the patient's medical history, while a third AI agent compares the findings with recent research papers, by means of adaptive collaboration. By sharing information in real-time and adjusting their connections, the AI agents can provide a more accurate and comprehensive diagnosis. Feedback from the healthcare professionals using these recommendations improves the system over time.

Supply Chain Optimization:

Traditional supply chain management systems typically use static algorithms to optimize routes or inventory levels, often leading to inefficiencies when unexpected delays or demand spikes occur. In the method 200, multiple AI agents collaborate dynamically to adjust inventory levels, predict demand, and reroute shipments in real-time based on traffic data and customer demand fluctuations. A feedback loop used by the system 100 allows it to improve future recommendations, reducing delays and optimizing resource usage over time.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of training and collaboration of AI agents, especially for addressing knowledge works. The embodiment, thus provides a mechanism for training of AI agents. Moreover, the embodiments herein further provide a mechanism of fine-tuning the AI agents based on feedback, to improve recommendations.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:

    initializing (202), via one or more hardware processors, a network comprising a plurality of nodes and a plurality of edges, wherein the plurality of nodes are associated with a plurality of Artificial Intelligence (AI) agents, and the plurality of edges are associated with a plurality of randomly initialized weights;
    generating (204), by processing one or more input signals obtained for one or more AI agents from among the plurality of AI agents, associated one or more outputs, by the one or more AI agents, via the one or more hardware processors;
    deciding (206) an action from among a plurality of actions based on the one or more outputs, via the one or more hardware processors, wherein the plurality of actions comprise: i) a decision on whether to activate one or more additional AI agents based on a related threshold, ii) compute and execute one or more tasks, and iii) decision on what information to transmit as task output to one or more connected AI agents; and
    training (208) the network to generate a trained network, via the one or more hardware processors, by updating the randomly initialized weights associated with the plurality of edges, based on the decided action, by:

        computing a weight adjustment value for each of the plurality of edges based on one or more activation levels of one or more of the plurality of AI agents identified as active based on the decided action, associated with the plurality of nodes, as:

$$\Delta w_{ij} = \alpha \cdot (a_i \cdot a_j),$$

        where $a_i$ and $a_j$ are activation levels of agents i and j, $\alpha$ is a learning rate updating weights based on the computed weight adjustment value as: $w_{ij} \leftarrow w_{ij} \cdot (1-\lambda) + \Delta w_{ij}$, where $\lambda$ is a predefined decay factor.

2. The processor implemented method (200) as claimed in claim 1, wherein for one or more recommendations generated by the trained network, a feedback is obtained from an environment where the plurality of AI agents are deployed, and wherein the feedback is used to update a plurality of parameters of the network and reconfigure the plurality of edges in the network.

3. The processor implemented method (200) as claimed in claim 1, wherein after each of the one or more tasks, a refractory period is simulated for respective one or more AI agents to prevent immediate reactivation of the respective one or more AI agents.

4. The processor implemented method (200) as claimed in claim 1, wherein sensitivity of one or more of the AI agents is varied to dynamically match at least one of an activity period or an inactivity period of the one or more AI agents.

5. The processor implemented method (200) as claimed in claim 1, wherein a firing pattern replication technique is used to determine, based on simulated neural action potentials, when each of the plurality of AI agents processes and sends information.

6. A system (100), comprising:

    one or more hardware processors (102);
    a communication interface (112); and
    a memory (104) storing a plurality of instructions, which when executed, cause the one or more hardware processors to:

        initialize a network comprising a plurality of nodes and a plurality of edges, wherein the plurality of nodes are associated with a plurality of Artificial Intelligence (AI) agents, and the plurality of edges are associated with a plurality of randomly initialized weights;
        generate, by processing one or more input signals obtained for one or more AI agents from among the plurality of AI agents, associated one or more outputs, by the one or more AI agents;
        decide an action from among a plurality of actions based on the one or more outputs, wherein the plurality of actions comprise: i) a decision on whether to activate one or more additional AI agents based on a related threshold, ii) compute and execute one or more tasks, and iii) decision on what information to transmit as task output to one or more connected AI agents; and
        train the network to generate a trained network by updating the randomly initialized weights associated with the plurality of edges, based on the decided action, by:

            computing a weight adjustment value for each of the plurality of edges based on one or more activation levels of one or more of the plurality of AI agents identified as active based on the decided action, associated with the plurality of nodes, as:

$$\Delta w_{ij}=\alpha\cdot(a_i\cdot a_j),$$

where ai and aj are activation levels of agents i and j, $\alpha$ is a learning rate updating weights based on the computed weight adjustment value as: $w_{ij}\leftarrow w_{ij}\cdot(1-\lambda)+\Delta w_{ij}$, where $\lambda$ is a predefined decay factor.

7. The system (100) as claimed in claim 6, wherein for one or more recommendations generated by the trained network, a feedback is obtained by the one or more hardware processors, from an environment where the plurality of AI agents are deployed, and wherein the feedback is used to update a plurality of parameters of the network and reconfigure the plurality of edges in the network.

8. The system (100) as claimed in claim 6, wherein the one or more hardware processors are configured to simulate a refractory period after each of the one or more tasks, for respective one or more AI agents to prevent immediate reactivation of the respective one or more AI agents.

9. The system (100) as claimed in claim 6, wherein the one or more hardware processors are configured to vary sensitivity of one or more of the AI agents to dynamically match at least one of an activity period or an inactivity period of the one or more AI agents.

10. The system (100) as claimed in claim 6, wherein the one or more hardware processors are configured to use a firing pattern replication technique to determine, based on simulated neural action potentials, when each of the plurality of AI agents processes and sends information.

11. One or more non-transitory machine-readable information storage mediums comprising one or more instructions which when executed by one or more hardware processors cause:

initializing a network comprising a plurality of nodes and a plurality of edges, wherein the plurality of nodes are associated with a plurality of Artificial Intelligence (AI) agents, and the plurality of edges are associated with a plurality of randomly initialized weights; generating by processing one or more input signals obtained for one or more AI agents from among the plurality of AI agents, associated one or more outputs, by the one or more AI agents; deciding an action from among a plurality of actions based on the one or more outputs, wherein the plurality of actions comprise: i) a decision on whether to activate one or more additional AI agents based on a related threshold, ii) compute and execute one or more tasks, and iii) decision on what information to transmit as task output to one or more connected AI agents; and training the network to generate a trained network, by updating the randomly initialized weights associated with the plurality of edges, based on the decided action, by:

computing a weight adjustment value for each of the plurality of edges based on one or more activation levels of one or more of the plurality of AI agents identified as active based on the decided action, associated with the plurality of nodes, as:

$$\Delta w_{ij}=\alpha\cdot(a_i\cdot a_j),$$

where ai and aj are activation levels of agents i and j, $\alpha$ is a learning rate updating weights based on the computed weight adjustment value as: $w_{ij}\leftarrow w_{ij}\cdot(1-\lambda)+\Delta w_{ij}$, where $\lambda$ is a predefined decay factor.

12. The one or more non-transitory machine readable information storage mediums as claimed in claim 11, wherein for one or more recommendations generated by the trained network, a feedback is obtained from an environment where the plurality of AI agents are deployed, and wherein the feedback is used to update a plurality of parameters of the network and reconfigure the plurality of edges in the network.

13. The one or more non-transitory machine readable information storage mediums as claimed in claim 11, wherein after each of the one or more tasks, a refractory period is simulated for respective one or more AI agents to prevent immediate reactivation of the respective one or more AI agents.

14. The one or more non-transitory machine readable information storage mediums as claimed in claim 11, wherein sensitivity of one or more of the AI agents is varied to dynamically match at least one of an activity period or an inactivity period of the one or more AI agents.

15. The one or more non-transitory machine readable information storage mediums as claimed in claim 11, wherein a firing pattern replication technique is used to determine, based on simulated neural action potentials, when each of the plurality of AI agents processes and sends information.

100

108

MEMORY 104

MODULES 106

REPOSITORY 110

I/O INTERFACE
112

HARDWARE
PROCESSORS 102

FIG. 1

initializing, via one or more hardware processors, a network comprising a plurality of nodes and a plurality of edges, wherein the plurality of nodes are associated with a plurality of Artificial Intelligence (AI) agents, and the plurality of edges are associated with a plurality of randomly initialized weights

202

generating, by processing one or more input signals obtained for one or more AI agents from among the plurality of AI agents, associated one or more outputs, by the one or more AI agents, via the one or more hardware processors

204

deciding an action from among a plurality of actions based on the one or more outputs, via the one or more hardware processors, wherein the plurality of actions comprise: i) a decision on whether to activate one or more additional AI agents based on a related threshold, ii) compute and execute one or more tasks, and iii) decision on what information to transmit as task output to one or more connected AI agents

206

training the network to generate a trained network, via the one or more hardware processors, by updating the randomly initialized weights associated with the plurality of edges, based on the decided action, by: computing a weight adjustment value for each of the plurality of edges based on one or more activation levels of one or more of the plurality of AI agents identified as active based on the decided action, associated with the plurality of nodes, as:
$$\Delta wij = \alpha \cdot (ai \cdot aj),$$
where ai and aj are activation levels of agents i and j, $\alpha$ is a learning rate updating weights based on the computed weight adjustment value as:
$$wij \leftarrow wij \cdot (1-\lambda) + \Delta wij, \text{ where } \lambda \text{ is a predefined decay factor}$$

208

200

FIG. 2

Europäisches
Patentamt

European
Patent Office

Office européen
des brevets

# EUROPEAN SEARCH REPORT

**Application Number**

EP 25 20 2074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Foerster Jakob N ET AL: "Learning to Communicate with Deep Multi-Agent Reinforcement Learning", arXiv.org, 24 May 2016 (2016-05-24), XP093361146, DOI: 10.48550/arXiv.1605.06676 Retrieved from the Internet: URL:https://arxiv.org/pdf/1605.06676 [retrieved on 2026-02-03] * page 1 - page 9, paragraph 2 * * Appendices A-C * ----- | 1-15 | INV. G06N3/084 G06N3/098 |
| A | US 11 948 079 B2 (UNIV TSINGHUA [CN]) 2 April 2024 (2024-04-02) * abstract; claims 1-18; figures 1-6 * * column 1, line 51 - column 7, line 24 * ----- | 1-15 | |
| X,P | Ma Xiaowen ET AL: "Agentic Neural Networks: Self-Evolving Multi-Agent Systems via Textual Backpropagation", , 18 July 2025 (2025-07-18), XP093360900, DOI: 10.48550/arXiv.2506.09046 Retrieved from the Internet: URL:https://arxiv.org/pdf/2506.09046 [retrieved on 2026-02-03] * page 1 - page 9, left-hand column, last paragraph * * page 14 - page 26 * ----- | 1-15 | **TECHNICAL FIELDS SEARCHED (IPC)** G06N |

The present search report has been drawn up for all claims

| Place of search | Date of completion of the search | Examiner |
|---|---|---|
| The Hague | 3 February 2026 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ......................................................................................
& : member of the same patent family, corresponding
document

EPO FORM 1503 03.82 (P04C01)

EP 4 752 790 A1

## ANNEX TO THE EUROPEAN SEARCH REPORT
## ON EUROPEAN PATENT APPLICATION NO.

EP 25 20 2074

03-02-2026

| Patent document cited in search report | Publication date | Patent family member(s) | Publication date |
|---|---|---|---|
| US 11948079 B2 | 02-04-2024 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421092860